# FASCICULE DE BREVET EUROPEEN

(11) **EP 0 406 037 B1**
(45) Date de publication et mention de la délivrance du brevet: **14.04.1993**
(21) Numéro de dépôt: 90401456.0
(22) Date de dépôt: 31.05.1990
(51) Int. Cl.: F16B 21/12

(54) **Epingle de verrouillage**
Sicherungsnadel
Locking pin

(30) Priorité: 28.06.1989 FR 8908607
(43) Date de publication de la demande: 02.01.1991
(73) Titulaire: ALLIEDSIGNAL EUROPE SERVICES TECHNIQUES, 93700 Drancy (FR)
(72) Inventeur: Hulliger, Claude, Bendix Europe, F-93700 Drancy (FR); Le Deit, Gérard, Bendix Europe, F-93700 Drancy (FR)

(56) Documents cités:
- FR-A- 643 215
- FR-A- 1 348 440
- FR-A- 2 024 410
- GB-A- 856 964
- US-A- 1 556 108

## Description

L'invention concerne une épingle de verrouillage notamment pour clavette par exemple utilisée dans un frein à disque.

On connaît déjà les freins à disque à étrier ou à cadre coulissant, dans lesquels un ou plusieurs moteurs de frein agissent directement sur l'un des organes de friction, tandis que l'autre organe de friction est sollicité en engagement contre le disque par coulissement de l'étrier ou du cadre par rapport à un organe support fixe ; l'étrier est reçu de façon coulissante par l'intermédiaire de clavettes dans lesquelles un orifice a été prévu pour recevoir une épingle qui empêche son échappement.

L'épingle est une longueur continue de fil métallique élastique en forme générale de U pour constituer deux branches symétriques, chacune d'elles représentant généralement deux vagues sensiblement sinusoïdales comme représenté dans EP-B-0 002 399.

La mise en place de l'épingle dans l'orifice de la clavette est assurée par une action verticale imposée à l'épingle dans une direction axiale perpendiculaire au plan de la clavette, l'action étant dirigée vers le bas pour le montage et vers le haut pour le démontage ; cette action entraîne une déformation élastique des deux branches sinusoïdales qui place l'épingle en position de blocage ou de déblocage.

Le système est satisfaisant, mais le verrouillage de l'épingle n'est assuré que par la déformation élastique des deux branches sinusoïdales et, de ce fait, l'épingle peut s'échapper de la clavette.C'est également le cas de la goupille décrite dans FR-A-643 215.

On connait par ailleurs du document FR-A-1348 440 divers modes de réalisation d'éléments de fixation pour des broches ou des arbres, constitués d'un élément d'arrêt, traversant un perçage de la broche ou de l'arbre et d'un élément de fixation relié à l'élément d'arrêt, entourant la broche ou l'arbre et formant pièce d'écartement élastique. De tels éléments de fixation sont d'un montage et d'un démontage malaisé et ne conviennent que pour fixer des broches ou arbres cylindriques.

On connaît par ailleurs, par le document FR-A-2 024 410, un ensemble conforme au préambule de la revendication principale et faisant donc usage d'une épingle formant boucle.

Toutefois, ce dispositif connu n'est applicable qu'au maintien en rotation d'un arbre perpendiculaire à la pièce destinée à coopérer avec l'épingle, la présence d'un tel arbre étant par ailleurs nécessaire au maintien de cette épingle.

La présente invention a pour but de remédier à ces inconvénients et limitations ; pour ce faire, l'agencement du fil métallique constituant l'épingle est conçu de telle manière qu'il assure un verrouillage parfait de l'épingle sans pour autant empêcher l'opération de déverrouillage.

Pour arriver à ce résultat, l'invention propose un ensemble comprenant une pièce et une épingle de verrouillage, la pièce présentant un orifice pratiqué à proximité d'un de ses cotés et l'épingle de verrouillage comprenant une boucle en forme de U traversant l'orifice. Selon l'invention la pièce présente deux faces planes en regard, chaque branche de la boucle se prolongeant par une partie s'écartant de l'orifice sur l'une des faces planes de la pièce, la partie opposée au coté de la pièce se prolongeant vers ledit coté et comportant une extrémité formant crochet en regard de l'autre face plane de la pièce et dirigée sensiblement vers l'orifice.

L'invention sera mieux comprise et d'autres buts, avantages et caractéristiques apparaîtront plus clairement à la lecture de la description qui suit d'un mode préféré de réalisation donné à titre non limitatif et à laquelle une planche de dessin est annexée sur laquelle :

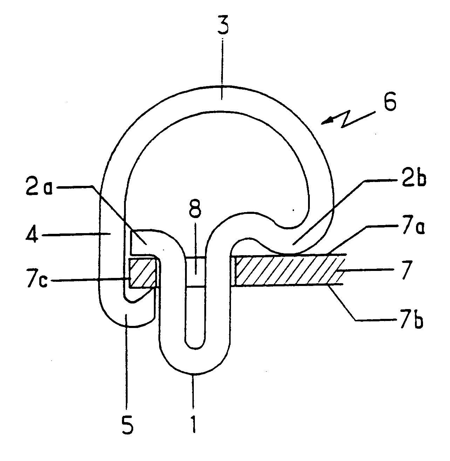

L'unique figure est une vue en coupe d'une épingle selon l'invention, en place dans une clavette.

On a représenté sur la figure une épingle 6 conforme à l'invention, en position de verrouillage, dans l'orifice 8 de la clavette 7 ; l'épingle 6 est une longueur continue de fil métallique élastique conformé et replié sur lui-même pour constituer différentes formes géométriques : une boucle 1 en forme de U introduite en coulissement vertical dans l'orifice 8 prévu à cet effet, l'une des deux extrémités étant une branche 2a formant sensiblement angle droit avec l'une des branches de la boucle 1, l'autre extrémité se prolongeant pour former une partie 2b ondulée opposée à la branche 2a, qui repose sur la face 7a de la clavette 7 et se continuant pour former un demi-cercle 3 qui constitue la tête de l'épingle et dont le diamètre est tel que ce demi-cercle termine sa course à l'extérieur de la clavette à proximité immédiate du côté 7c en formant un brin rectiligne 4 parallèle au côté 7c, lequel brin se prolonge pour former un crochet d'appui 5 en regard de la face 7b ; l'extrémité du crochet est telle que la distance qui la sépare de l'une des parties 2a, 2b est sensiblement inférieure à la longueur de la boucle 1 et qu'elle forme un angle aigü avec ce brin pour venir se placer sous l'une 7b des faces planes de la clavette 7 de telle manière que les extrémités 2a, 5 situées de part et d'autre des faces planes 7a, 7b avec un écartement légèrement supérieur ou égal à l'épaisseur entre les faces planes assurent avec la partie 2b le verrouillage de l'épingle 6.

L'épingle 6 est introduite dans l'orifice par sa boucle 1 en forme de U jusqu'à ce que, par déformation élastique du brin 4 dans une direction parallèle aux faces planes, le crochet 5, du fait de l'inclinaison de son extrémité qui est telle qu'elle forme un angle plus petit que l'angle droit avec le brin 4, pour faciliter son montage, soit amené sous la face plane 7b pour finalement conduire au verrouillage de l'épingle sur la clavette.

L'opération de déverrouillage consiste à faire subir à la tête de l'épingle l'action d'une rotation à 90° en déformant élastiquement la partie en demi-cercle 3 et le brin rectiligne 4 de façon à amener le crochet 5 en contact plan avec le côté 7c, suivie d'une translation verticale qui fait coulisser par frottement le crochet 5 sur ce côté.

Une telle épingle peut trouver son application également au verrouillage de deux éléments plans.

L'homme du métier pourra apporter à cette épingle de nombreuses modifications. Par exemple, la partie en demi-cercle 3 peut affecter toute autre forme, par exemple à angles. D'autre part, la stabilité de l'épingle verrouillée peut être améliorée en réduisant l'écartement entre les extrémités 2a, 5 de façon à ne laisser aucun jeu entre ces extrémités et chacune des faces planes. Un verrouillage optimal peut être réalisé en engageant l'extrémité du crochet dans l'orifice, entre la branche qui se prolonge par la partie 2a et la paroi de l'orifice 8. Enfin, une stabilité optimale peut être obtenue en créant deux points de serrage de l'épingle sur la clavette, l'un résultant de l'appui du brin rectiligne 4 sur le côté 7c, l'autre résultant de l'appui de la branche qui se prolonge par la partie 2a sur la paroi de l'orifice 8.

## Revendications

1. Ensemble comprenant une pièce (7) et une épingle de verrouillage (6), la pièce (7) présentant un orifice (8), l'épingle de verrouillage (6) comprenant une boucle (1) en forme de U traversant cet orifice (8), la pièce (7) présentant deux faces planes (7a, 7b) en regard, et chaque branche de la boucle (1) se prolongeant par une partie (2a, 2b) s'écartant de l'orifice sur l'une (7a) des faces planes de la pièce (7), caractérisé en ce que ledit orifice est pratiqué à proximité d'un des cotés (7c) de la pièce et en ce que la partie (2b) de l'épingle qui est opposée à ce côté (7c) se prolonge vers ce dernier et comporte une extrémité formant crochet (5) en regard de l'autre (7b) face plane de la pièce (7) et dirigée sensiblement vers l'orifice (8).

2. Ensemble selon la revendication 1 caractérisé en ce que la distance entre l'extrémité du crochet (5) et l'une desdites parties (2a, 2b) est sensiblement inférieure à la longueur de ladite boucle en forme de U.

3. Ensemble selon la revendication 1 ou 2 caractérisé en ce que le prolongement entre ladite partie (2b) s'écartant dudit orifice (8) et ladite extrémité formant crochet (5) affecte sensiblement la forme d'un demi-cercle (3) se prolongeant par un brin rectiligne (4) perpendiculaire auxdites faces planes.

4. Ensemble selon l'une quelconque des revendications 1 à 3 caractérisé en ce que l'inclinaison de l'extrémité du crochet (5) est telle que ladite extrémité forme un angle aigu avec le brin rectiligne (4).

5. Ensemble selon l'une quelconque des revendications 1 à 4 caractérisé en ce que la distance entre la branche (2a) et l'extrémité formant crochet (5) est sensiblement égale à l'épaisseur entre lesdites faces planes.

6. Ensemble selon l'une quelconque des revendications 1 à 4 caractérisé en ce que l'extrémité formant crocher (5) est sensiblement engagée dans l'orifice (8).

7. Ensemble selon l'une quelconque des revendications 3 à 5 caractérisé en ce que la distance entre le brin (4) et la partie (2a) de la branche en regard dudit brin est sensiblement égale à la distance entre ledit côté (7c) et ledit orifice (8).

8. Ensemble selon l'une quelconque des revendications 3 à 7 caractérisé en ce que le brin rectiligne (4) est déformable élastiquement dans une direction parallèle auxdites faces planes.

## Patentansprüche

1. Anordnung, umfassend ein Bauteil (7) und einen Sicherungssplint (6), wobei das Bauteil (7) eine Öffnung (8) aufweist, der Sicherungssplint (6) eine Schleife (1) in Form eines durch diese Öffnung (8) hindurchgeführten U umfaßt, das Bauteil (7) zwei voneinander abgewandte ebene Flächen (7a, 7b) aufweist, und jeder Schenkel der Schleife (1) sich mit einem Abschnitt (2a, 2b) fortsetzt, der auf der einen ebenen Fläche (7a) des Bauteils (7) von der Öffnung (8) wegführt, dadurch gekennzeichnet, daß die genannte Öffnung nahe einem der Ränder (7c) des Bauteils vorgesehen ist, und daß der Abschnitt (2b) des Splints, der diesem Rande (7c) gegenüberliegt, sich in Richtung auf diesen letzteren fortsetzt und ein gegen die andere ebene Fläche (7b) des Bauteils gerichtetes, einen Haken (5) bildendes Ende besitzt, das im wesentlichen zu der Öffnung (8) hin gerichtet ist.

2. Anordnung nach Anspruch 1, dadurch gekennzeichnet, daß der Abstand zwischen dem Ende des Hakens (5) und dem einen der genannten Abschnitte (2a, 2b) deutlich geringer ist als die Länge der genannten U-förmigen Schleife.

3. Anordnung nach Anspruch 1 oder 2, dadurch gekennzeichnet, daß die Fortführung von dem genannten Abschnitt (2b), der sich von der genannten Öffnung (8) entfernt, zu dem genannten, einen Haken (5) bildenden Ende im wesentlichen die Form eines Halbkreises (3) hat, der in ein senkrecht zu den genannten ebenen Flächen verlaufendes geradlinigen Trum (4) übergeht.

4. Anordnung nach einem der Ansprüche 1 bis 3, dadurch gekennzeichnet, daß das Ende des Hakens (5) so geneigt ist, daß es mit dem geradlinigen Trum (4) einen spitzen Winkel einschließt.

5. Anordnung nach einem der Ansprüche 1 bis 4, dadurch gekennzeichnet, daß der Abstand zwischen dem Abschnitt (2a) und dem den Haken (5) bildenden Ende im wesentlichen gleich dem Dickenabstand zwischen den genannten ebenen Flächen ist.

6. Anordnung nach einem der Ansprüche 1 bis 4, dadurch gekennzeichnet, daß das den Haken (5) bildende Ende wesentlich in die Öffnung (8) eingreift.

7. Anordnung nach einem der Ansprüche 3 bis 5, dadurch gekennzeichnet, daß der Abstand zwischen dem Trum (4) und dem Abschnitt (2a) des dem genannten Trum gegenüberliegenden Schenkels im wesentlichen gleich dem Abstand zwischen dem genannten Rande (7c) und der genannten Öffnung (8) ist.

8. Anordnung nach einem der Ansprüche 3 bis 7, dadurch gekennzeichnet, daß das geradlinige Trum (4) in einer Richtung parallel zu den genannten ebenen Flächen elastisch verformbar ist

## Claims

1. Assembly comprising a component (7) and a locking pin (6), the component (7) having an orifice (8), the locking pin (6) comprising a U-shaped loop (1) passing through this orifice (8), the component (7) having two facing plane faces (7a, 7b), and each branch of the loop (1) being extended by a part (2a, 2b) diverging from the orifice on one (7a) of the plane faces of the component (7), characterised in that the said orifice is made in the vicinity of one of the sides (7c) of the component and in that the part (2b) of the pin which is opposite to this side (7c) extends towards the latter and has an end in the form of a hook (5) facing the other (7b) plane face of the component (7) and pointing substantially towards the orifice (8).

2. Assembly according to Claim 1, characterized in that the distance between the end of the hook (5) and one of the said parts (2a, 2b) is substantially less than the length of the said U-shaped loop.

3. Assembly according to Claims 1 or 2, characterized in that the extension between the said part (2b) diverging from the said orifice (8) and the said end in the form of a hook (5) assumes substantially the shape of a semicircle (3) being extended by a rectilinear strand-part (4) perpendicular to the said plane faces.

4. Assembly according to any one of Claims 1 to 3, characterized in that the inclination of the end of the hook (5) is such that the said end forms an acute angle with the rectilinear strand-part (4).

5. Assembly according to any one of Claims 1 to 4, characterized in that the distance between the branch (2a) and the end in the form of a hook (5) is substantially equal to the thickness between the said plane faces.

6. Assembly according to any one of Claims 1 to 4, characterized in that the end in the form of a hook (5) is substantially engaged in the orifice (8).

7. Assembly according to any one of Claims 3 to 5, characterized in that the distance between the strand-part (4) and the part (2a) of the branch facing the said strand-part is substantially equal to the distance between the said side (7c) and the said orifice (8).

8. Assembly according to any one of Claims 3 to 7, characterized in that the rectilinear strand-part (4) is elastically deformable in a direction parallel to the said plane faces.
